(19) Europäisches Patentamt
European Patent Office
Office européen des brevets

(11) Publication number: **0 175 432**
**B1**

(12) **EUROPEAN PATENT SPECIFICATION**

(45) Date of publication of patent specification: **02.05.90**

(51) Int. Cl.[5]: **B 01 D 67/00,** B 01 D 71/36, B 01 D 27/06, B 01 D 69/10

(21) Application number: **85302026.1**

(22) Date of filing: **25.03.85**

(54) **All fluorocarbon filter element.**

(30) Priority: **10.09.84 US 649008**

(43) Date of publication of application:
**26.03.86 Bulletin 86/13**

(45) Publication of the grant of the patent:
**02.05.90 Bulletin 90/18**

(84) Designated Contracting States:
**AT BE CH DE FR GB IT LI LU NL SE**

(56) References cited:
**EP-A-0 062 867**
**EP-A-0 139 822**
**DE-A-3 425 027**
**DE-A-3 444 387**
**US-A-3 457 339**
**US-A-4 154 688**
**US-A-4 392 958**

**PATENTS ABSTRACTS OF JAPAN, vol. 8, no. 156 (C-234)1593r, 19th July 1984; & JP-A-59 62 323 (TSUCHIYA SEISAKUSHO K.K.) 09-04-1984**

**PATENTS ABSTRACTS OF JAPAN, vol. 7, no. 195 (C-183)1340r, 25th August 1983; & JP-A-58 98 111 (TSUCHIYA SEISAKUSHO K.K.) 10-06-1983**

(73) Proprietor: **HR TEXTRON INC.**
**25200 West Rye Canyon Road**
**Valencia, CA 91355 (US)**

(72) Inventor: **Bilicich, Louis A.**
**28361 Winterdale Drive**
**Canyon Country California 91351 (US)**
Inventor: **Flaherty, James E.**
**12231 Hartland Street**
**North Hollywood California 91605 (US)**
Inventor: **Kaplan, Stephen J.**
**4420 Cezanne Avenue**
**Woodland Hills California 91364 (US)**

(74) Representative: **Newstead, Michael John et al**
**Page & Co. Temple Gate House Temple Gate**
**Bristol BS1 6PL (GB)**

**EP 0 175 432 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a filter element.

In many manufacturing processes it has been found desirable to utilize filter elements in the presence of highly reactive chemicals such as sulphuric acid, nitric acid, chromic acid, hydrochloric acid, hydrofluoric acid, sodium hypochlorite and the like, sometimes at relatively high temperatures. Such highly reactive chemicals attack most known prior art filter elements, particularly those utilizing solvents or adhesives in the manufacture of the elements. As a result, the prior art filter elements either cannot be used or have a relatively short lifetime due to chemical attack and must be replaced fairly frequently, thus adding to the cost of the manufucturing process.

Fluorocarbon resins have unique combinations of physical and chemical properties which make them particularly useful in such hostile environments as those of filtering reactive chemicals even at elevated temperatures.

Various efforts have been made to construct filter elements using fluorocarbon resins which will withstand such highly reactive chemicals and the best known art is represented by U.S. Patents 3 457 339, 2 732 031, 2 772 256, 2 934 791, 2 941 620, 3 013 607 and 4 284 966. However these efforts have not been successful in constructing a filter element entirely of a fluorocarbon resin.

EP—A—139822 (priority date 9.9.83, publication date 8.5.85) discloses a method for producing a filter element made wholly of a fluorocarbon resin characterized by forming sheet comprising a filter membrane made of a flurocarbon resin and net supporters made of thermoplastic fluorocarbon resin superimposed on the both surfaces thereof into a pleat form, bending the pleated sheet into a cylindrical form, liquid-tightly welding the edge parts of the adjacent bottom sides, heating the both end parts of the cylindrical pleat-form filter to a temperature higher than the melting point of the net supporter to pre-weld the pleats, inserting the end parts of the pre-welded pleats into a molten thermoplastic fluorocarbon resin in a circular mold having a central opening to force the resin into the pleats, whereby the end part and the molten resin are integrally welded together, fitting fluorocarbon resin caps having a prescribed shape in the end parts of the resulting filter material and if desired, a flurocarbon resin core material for supporting the filter material inside the central opening of the resulting filter material, and then integrally welding two or three of the assembly thus obtained.

According to the present invention from one aspect, there is provided a filter element constructed exclusively from fluorocarbon resin and comprising: a fluorocarbon resin perforate support core; a fluorocarbon resin filter medium comprising a porous membrane laminated with a screen of fluorocarbon resin material and disposed upon said support core, said medium having first and second end edges and first and second side edges, the material of said screen having a lower melting point than that of the material of said membrane; and first and second fluorocarbon resin end caps heat bonded to respective ones of said end edges, in which filter element said end and side edges have been heat sealed by the application of pressure and heat, at a temperature less than the melting point of the material of the membrane, so that a portion of the material of said screen extends through pores in said membrane and encapsulates and seals said membrane along said side and end edges.

According to the present invention from another aspect, there is provided a method of manufacturing a filter element constructed exclusively of fluorocarbon resin and comprising a filter medium having side edges and opposite end edges, the medium being bonded at said end edges to a pair of end caps and said medium comprising a screen laminated with a porous membrane, the material of said screen having a melting point which is lower than that of the material of said membrane, the method comprising the steps of:

applying heat and pressure to said end edges for a time and at a temperature sufficient to melt the material of said screen but less than the melting point of the material of said membrane and to allow molten screen material to flow into pores of said membrane along said end edges, and applying heat and pressure to said side edges for a time and at a temperature sufficient to melt the material of said screen but less than the melting point of the material of said membrane and to allow molten screen material to flow into pores of said membrane along said side edges, so that said membrane is encapsulated and sealed along said end and side edges;

applying heat to each of said end caps for a time and at a temperature sufficient to preferentially melt a surface of the end cap;

inserting a respective one of said end edges of said filter medium into the molten fluorocarbon material of a respective one of said end caps; and

cooling said end caps and end edges to solidify said molten material and bond said filter medium to said end caps.

Fluorocarbon resins useful in the present invention include those polymers in which some or all external bonds of the carbon atoms have adhered thereto an atom of fluorine. Typical examples of such fluorocarbon resins are: a polymer such as that known as "PTFE" which consists of recurring tetrafluoroethylene monomer units whose formula is:

$$[CF_2—CF_2]$$

commonly referred to as "TFE"; a copolymer of ethylene and TFE known as "ETFE"; a copolymer of tetrafluoroethylene and perfluoronated vinyl ether having the formula:

$$[CF(CF_3)—CF_2(CF_2—CF_2)_n]_m$$

commonly referred to as "FEP"; and a copolymer of tetrafluoroethylene and perfluoronated vinyl ether having the formula:

$$[CF(OR_f)—(CF_2—CF_2)_n]_m$$

commonly referred to as "PFA".

The present invention will now be described, by way of example, with reference to the accompanying drawings, in which:-

Figure 1 is a composite isometric view, partially broken away, illustrating a filter element constructed in accordance with the principles of the present invention;

Figure 2 is a schematic diagram illustrating one of the steps in the manufacture of the filter element;

Figure 3 is a schematic diagram of a portion of a filter medium after the step illustrated in Figure 2 has been performed;

Figures 4 and 5 illustrate seaming the side edges of the filter medium;

Figure 6 is a schematic diagram of an additional step in the fabrication of a filter element constructed in accordance with the present invention; and

Figure 7 is a schematic diagram illustrating the bonding of an end cap to the closed end of the filter medium.

By utilization of a filter element constructed entirely of fluorocarbon resin, almost unlimited chemical resistance can be obtained from filter elements even in highly aggressive and hostile environments which normally limit the life of such filter elements. Such a filter element is illustrated in Figure 1 and is constructed in accordance with the principles of the present invention. As is therein shown, a perforate support core 10 constructed of a fluorocarbon resin is utilized to support a pleated filter medium shown generally at 12. The filter medium 12 is constructed of a filter membrane 14 laminated with a support screen 16. As an alternative embodiment, an additional support screen 15 may be placed on the opposite side of the membrane 14 to assist in handling the membrane during processing steps to form the filter medium. The membrane 14 is typically constructed of an expanded amorphous-locked fluorocarbon resin, such for example as a polytetrafluoroethylene, and may, for example, be of the type as disclosed in U.S. Patent 3 953 566, the disclosure of which is incorporated herein by reference. In any event, membrane 14 is of uniform porosity and separates very small particles from the filtrant and, for example, can have a rating of from .01 to 10 microns. On the other hand, the screen 16, as well as the screen 15 (if used), merely provide a mechanical support for the membrane 14 and have relatively large openings therein which do not inhibit the flow of the filtrant.

The filter medium 12 is secured between a pair of end caps 18 and 20 one or both of which may have an opening such as shown at 22 to provide for the flow of the filtrant, which typically flows in from the outside as is well known to those skilled in the art. The filter medium 12 must be firmly secured to the end caps 18 and 20 in such a manner that a fluid tight seal of high strength is obtained to prevent any bypass of the material being filtered. As is shown in Figure 1, the filter medium 12 is pleated prior to being bonded to the end caps 18 and 20 but such is not required.

An outer protective sleeve 24 constructed of a perforate fluorocarbon resin is positioned over the filter medium 12 to protect it from damage both from handling and also in the event that a back pressure occurs from backflushing or an accidental surge or the like. If desired, the outer sleeve may be eliminated.

The filter element as illustrated in Figure 1 is constructed entirely of fluorocarbon resin. As a result thereof, the filter element can withstand attacks by highly reactive chemical materials of the type above referred to.

One of the major difficulties encountered in attempting to construct a filter element of all fluorocarbon resins has been forming the longitudinal seam on the filter medium 12 and sealing the end edges of the filter medium 12. The applicants have found that by utilizing the material as above described and by choosing a material for screen 16 having a slightly lower melting point than the material of membrane 14 and then by subjecting the end edges of the medium 12 to appropriate heat and pressure of sufficient magnitude to melt selectively the end edges of the screen 16 it will flow through pores of the membrane 14 and effectively encapsulate and seal the same. Such is illustrated schematically in Figure 2 to which reference is hereby made.

Preferably, the membrane 14 is constructed of a polytetrafluoroethylene fluorocarbon resin (PTFE) which has been laminated to a screen 16 constructed of tetrafluoroethylene and hexafluoropropylene fluorocarbon resins (FEP). By placing each end edge 26 of the medium 12 between the surfaces of an anvil 28 which is heated as is shown by the arrows 30 and by applying appropriate pressure as is illustrated by the arrow 32, the FEP melts and flows through the pores of the PTFE membrane as is shown in Figure 3 at 34. It has been found that if the temperature is maintained between 260°C and 343°C (500°F and 650°F) at a pressure of at least approximately $34.5 \times 10^4$Pa (50 p.s.i) for a period of at least approximately 3 seconds, the appropriate melting and flow of the FEP material through the pores of the PTFE material occurs. Additionally, a layer of FEP may be melted and caused to flow through the pores of the PTFE membrane as shown at 34 and then a screen as shown at 16 applied.

As is well known to those skilled in the art and as above referred to, the filter medium is appropriately pleated and the side edges thereof seamed, which is further illustrated in Figures 4 and

5. As is shown, the side edges at 36 of the pleated medium have been seamed to provide a seal along the entire length of the filter medium. Through utilizing the technique as shown with regard to the end edges, particularly in Figures 2 and 3, it has been found that an appropriate seam which is totally sealed through the entire length of the filter may be accomplished. Additionally, as is illustrated in Figure 5, the side edges (38 and 40) of the medium 12 may have a further layer 42 of FEP material placed therebetween. This sandwich is then subjected to the heat and pressure at the temperatures and for the times above designated which will result in an appropriate fluid tight sealing of the seam formed when the pleated medium is placed into a cylindrical form as shown in Figure 4.

After the appropriate heat sealing of the end edges and the seam as above described, the end edges of the medium 12 are appropriately closed and thereafter secured and bonded to respective ones of the end caps 18 and 20. Alternatively, the end caps may be bonded to the medium simultaneously with the closing thereof.

With reference now to Figure 6, there is illustrated the manner by which each end of the pleated fluorocarbon medium 12 is closed. As is therein shown, a release agent 44 is applied to the recessed annular surface of a heated mould 46. An annulus 48 of FEP fluorocarbon material is placed within a space defined by the recessed annular mould 46. Thereafter the pleated filter medium 12 disposed between the inner core 10 and outer sleeve 24 is placed in contact with the annulus 48. Heat is applied as shown by arrows 54 in an amount sufficient to melt the annulus 48 and part of the base of the filter medium assembly. A pressure as shown by arrow 56 is applied to the top of the filter medium assembly. The pressure may be applied during the entire heating step. The pressure along with the molten annulus causes the molten fluorocarbon material to flow between and close off the ends of the pleated medium and to completely seal the same. Alternatively, the screen 16 may be extended beyond the end edges of the pleated medium and such extensions may be substituted for the annulus 48.

It has been found that the annulus 48 may take any form desired in that it may be a single or several layers, granular or powdered in form or a combination thereof. It has also been found that the annulus may be FEP or PFA fluorocarbon material. Furthermore, the end edges of the filter medium may not require sealing as above described although such is considered the preferred embodiment.

The heat should be applied for a time and at a temperature to render the annulus 48 of FEP or PFA molten. It has been found that a temperature of from approximately 282°C to 343°C (540°F to 650°F) for a time of at least approximately 1 minute is sufficient. Also, a pressure of at least approximately $6.9\times10^3$Pa (one pound per square inch) has been found preferable depending upon the time it is applied. Such has been found not to be critical with the main criterion being to insure that the annulus material totally encapsulates the membrane material to effect a complete seal of the end of the pleated medium.

The release layer 44, if needed may be any material that will not stick to the medium or the retainer members. One such material is a thermoset polyimide sold under the name Kapton type H which is a trademark of E. I. duPont de Nemoirs & Co., Inc. Each end of the filter medium is similarly treated to close it off. Subsequently the end caps 18 and 20 are secured to the closed ends of the filter medium.

For purposes of illustration, an end cap 18 is shown in cross section in Figure 7 with the pleated filter medium 12 treated as described above positioned in place thereon during the bonding of the end cap thereto. The end cap 18 as is shown in Figure 7 is preferably constructed of FEP fluorocarbon resin material. The end cap is basically hat-shaped as is illustrated in Figure 7 and as also shown in Figure 1 may, if desired, have a centrally disposed opening as shown at 22.

The end cap 18 and the sealed end of the pleated filter medium are each heated by application of energy thereto for a time and at a temperature sufficient to render the opposed surfaces thereof (as shown in Figure 7) molten. The opposed surfaces are then brought into contact and the molten material allowed to cool. In this manner each end cap is fusion welded to the filter medium to complete the filter element.

It will also be recognized by those skilled in the art and particularly with reference to Figure 1 that at the same time as the filter medium 12 is bonded to the end caps, the support core 10 and the protective sleeve 24 may also be bonded to the end caps in like manner. It will also, however, be recognized that there is no necessity for such bonding to occur since the support core and the protective sleeve only provide a mechanical support and protection for the filter medium 12 and need not be bonded. The only requirement is that the filter medium 12 be securely and permanently bonded to the end caps to preclude any possibility of leakage of the material being filtered thereby contaminating the filtrant.

## Claims

1. A filter element constructed exclusively from fluorocarbon resin and comprising: a fluorocarbon resin perforate support core (10); a fluorocarbon resin filter medium (12) comprising a porous membrane (14) laminated with a screen (16) of fluorocarbon resin material and disposed upon said support core, said medium having first and second end edges (26) and first and second side edges (38, 40), the material of said screen having a lower melting point than that of the material of said membrane; and first and second fluorocarbon resin end caps (18, 20) heat bonded to respective ones of said end edges, in which filter element said end and side edges have been heat

sealed by the application of pressure and heat, at a temperature less than the melting point of the material of the membrane, so that a portion of the material of said screen extends through pores in said membrane and encapsulates and seals said membrane along said side and end edges.

2. A filter element according to claim 1, wherein said filter medium (12) is pleated and formed into a cylinder.

3. A filter element according to claim 1 or 2, which further includes an outer fluorocarbon resin perforate protective sleeve (24) disposed over said filter medium (12).

4. A filter element according to claim 3, wherein said perforate support core (10) and said protective sleeve (24) are each heat bonded to each of said end caps (18, 20).

5. A filter element according to any preceding claim, wherein said end caps (18, 20) and said screen (16) are constructed of the same fluorocarbon resin.

6. A filter element according to any preceding claim, which further includes an additional layer (42) of fluorocarbon resin material with said side edges (38, 40) and at least a portion of which extends through pores of said membrane (14), said additional layer being of the same material as said screen (16).

7. A method of manufacturing a filter element constructed exclusively of fluorocarbon resin and comprising a filter medium (12) having side edges (38, 40) and opposite end edges (26), the medium being bonded at said end edges to a pair of end caps (18, 20) and said medium comprising a screen (16) laminated with a porous membrane (14), the material of said screen having a melting point which is lower than that of the material of said membrane, the method comprising the steps of:

applying heat and pressure to said end edges for a time and at a temperature sufficient to melt the material of said screen but less than the melting point of the material of said membrane and to allow molten screen material to flow into pores of said membrane along said end edges, and applying heat and pressure to said side edges for a time and at a temperature sufficient to melt the material of said screen but less than the melting point of the material of said membrane and to allow molten screen material to flow into pores of said membrane along said side edges, so that said membrane is encapsulated and sealed along said end and side edges;

applying heat to each of said end caps for a time and a temperature sufficient to preferentially melt a surface of the end cap;

inserting a respective one of said end edges of said filter medium into the molten fluorocarbon material of a respective one of said end caps; and

cooling said end caps and end edges to solidify said molten material and bond said filter medium to said end caps.

8. A method according to claim 7, which further includes applying a separate layer (42) of fluorocarbon resin material contiguous with said side edges (38, 40) prior to the application of heat and pressure thereto.

**Patentansprüche**

1. Filterelement, das vollständig aus Fluorkohlenstoffharz hergestellt ist, umfassend: einen perforierten Trägerkern (10) aus Fluorkohlenstoffharz; ein Fluorkohlenstoffharzfiltermedium (12) umfassend eine poröse Membran (14), die mit einer Abdeckung (16) aus Fluorkohlenstoffharz beschichtet und auf dem Trägerkern angeordnet ist, wobei das Medium eine erste und eine zweite Endkante (26) sowie eine erste und eine zweite Seitenkante (38, 40) aufweist und das Material der Abdeckung einen niedrigeren Schmelzpunkt als das Material der Membran aufweist; und eine erste und eine zweite Fluorkohlenstoffharz-Endkappe (18, 20), die jeweils auf eine der Endkanten durch Wärme aufgeklebt sind, wobei am Filterelement die End- und Seitenkanten unter Anwendung von Druck und Hitze bei einer Temperatur wärmeversiegelt sind, die geringer als der Schmelzpunkt der Membran ist, so daß sich ein Teil des Materials der Abdeckung durch die Poren in der Membran erstreckt und die Membran entlang der Seiten- und Endkanten umkapselt und verseigelt.

2. Filterelement nach Anspruch 1, wobei das Filtermedium (12) gefältelt und in einen Zylinder geformt ist.

3. Filterelement nach Anspruch 1 oder 2, wobei weiterhin eine äußere perforierte Schutzhülse (24) aus Fluorkohlenstoffharz vorgesehen ist, die über dem Filtermedium (12) angeordnet ist.

4. Filterelement nach Anspruch 3, wobei der perforierte Trägerkörper (10) und die Schutzhülse (24) jeweils mit jeder der Endkappen (18, 20) durch Wärme verklebt sind.

5. Filterelement nach einem der vorhergehenden Ansprüche, wobei die Endkappen (18, 20) und die Abdeckung (16) aus demselben Fluorkohlenstoffharz gefertigt sind.

6. Filterelement nach einem der vorhergehenden Ansprüche, wobei weiterhin eine zusätzliche Schicht (42) aus Fluorkohlenstoffharzmaterial an den Rändern (38, 40) vorgesehen ist, von denen sich mindestens ein Teil durch Poren der Membran (14) erstreckt, wobei die zusätzliche Schicht aus demselben Material besteht, wie die Abdekkung (16).

7. Verfahren zum Herstellen eines ausschließlich aus Fluorkohlenstoffharz gefertigten Filterelementes, umfassen eine Filtermedium (12) mit Seitenkanten (38, 40) und einander gegenüberliegenden Endkanten (26), wobei das Medium an den Endkanten an ein Paar von Endkappen (18, 20) angeklebt ist und das Medium eine Abdekkung (16) umfaßt, die mit einer porösen Membran (14) laminiert ist, wobei das Material der Abdekkung einen Schmelzpunkt aufweist, der niedriger als derjenige des Materials der Membran ist, umfassend die Schritte:

Anwendung von Wärme und Druck auf die Endkanten für eine Zeitspanne und bei einer

Temperatur, die ausreicht, um das Material der Abdeckung zu schmelzen, jedoch geringer ist als der Schmelzpunkt des Materials der Membran, und die einen Fluß von geschmolzenem Abdekkungsmaterial in Poren der Membran entlang der Endkanten erlaubt, und Anwendung von Hitze und Druck auf die Seitenkanten für eine Zeitspanne und bei einer Temperatur, die ausreicht, um das Material der Abdeckung zu schmelzen, die jedoch niedriger ist als der Schmelzpunkt des Materials der Membran und ein Fließen des geschmolzenen Abdeckungsmaterials in Poren der Membran entlang deren Seitenkanten erlaubt, so daß die Membran entlang ihrer End- und Seitenkanten eingekapselt und versiegelt wird;

Anwendung von Wärme auf jede der Endkappen für eine Zeitspanne und bei einer Temperatur, die ausreicht, um vorzugsweise eine Fläche der Endkappe zu schmelzen;

Einsetzen jeweils einer Endkante des Filtermediums in das geschmolzene Fluorkohlenstoffmaterial einer entsprechenden Endkappe; und

Kühlen der Endkappen und der Endkanten, um das geschmolzene Material zu verfestigen und das Filtermedium an die Endkappen anzukleben.

8. Verfahren nach Anspruch 7, wobei die Aufbringung einer separaten Schicht (42) aus Fluorkohlenstoffharzmaterial bündig mit den Seitenkanten (38, 40) vor Anwendung von Wärme und Druck hierauf umfaßt ist.

**Revendications**

1. Filtre réalisé entièrement en résine de fluorocarbone caractérisé en ce qu'il comprend un noyau-support (10) perforé en résine de fluorocarbone, un élément filtrant (12) en résine de fluorocarbone comprenant une membrane poreuse (14) couchée en même temps qu'un écran (16) en résine de fluorocarbone et disposée sur ce noyau-support, ledit élément filtrant présentant un premier et un second bord d'extrémité (26) et un premier et un second bord latéral (38, 40), la matière dans laquelle est réalisé ledit écran présentant un point de fusion inferieur à celui de la matière formant ladite membrane; filtre comprenant également un premier et un second capuchon d'extrémité (18, 20) réunis par la chaleur, respectivement à chacun desdits bords d'extrémité, filtre dans lequel lesdits bords longitudinaux ont été soudés thermiquement par l'application d'une pression à chaud, à une température inférieure au point de fusion de la matière constituant la membrane de façon qu'une partie de la matière formant l'écran traverse les pores de cette membrane pour venir encapsuler et sceller ladite membrane le long desdits bords latéraux et des bords d'extrémités.

2. Filtre selon la revendication 1, caractérisé en ce que l'élément filtrant (12) est plissé et conformé en cylindre.

3. Filtre selon la revendication 1 ou 2, caractérisé en ce qu'il comprend en outre un manchon extérieur de protection (24) perforé (24) en résine de fluorocarbone recouvrant l'élément filtrant (12).

4. Filtre selon la revendication 3, caractérisé en ce que le noyau-support perforé (10) et ledit manchon de protection (24) sont chacun réunis par la chaleur à chacun desdits capuchons d'extrémité (18, 20).

5. Filtre selon l'une quelconque des revendications précédentes caractérisé en ce que lesdits capuchons d'extrémité (18, 20) et ledit écran (16) sont réalisés dans la même résine de fluorocarbone.

6. Filtre selon l'une quelconque des revendications précédentes, caractérisé en ce qu'il comprend en outre une couche supplémentaire interstitielle (42) de résine de fluorocarbone en association avec lesdits bords latéraux (38, 40) et au moins une partie s'étendant à travers les pores de ladite membrane (14), cette couche supplémentaire étant réalisée dans la même matière que ledit écran.

7. Procédé de fabrication d'un filtre réalisé exclusivement en résine de fluorocarbone comprenant un élément filtrant (12) possédant des bords latéraux (38, 40) et des bords opposés d'extrémité (26), l'élément filtrant étant relié au niveau desdits bords d'extrémité à une paire de capuchons d'extrémités (18, 20) ledit élément filtrant comprenant un écran (16) couché sur une membrane poreuse (14), la matière de cet écran possédant une température de fusion inférieure à celle de ladite membrane, procédé caractérisé par les étapes suivantes:

appliquer une source de chaleur et de pression contre lesdits bords d'extrémité pendant une durée et à une température suffisante pour fondre la matière dudit écran, température inférieure au point de fusion de la matière de ladite membrane et permettre ainsi, à la matière fondue constituant l'écran, de fluer à travers les pores de ladite membrane le long des bords d'extrémité, appliquer une source de chaleur et de pression aux bords latéraux pendant une durée et à une température suffisante pour fondre la matière dudit écran, à une température inférieure au point de fusion de la matière de ladite membrane et de permettre à la matière en fusion constituant l'écran en fusion de fluer à travers les pores de ladite membrane, le long des côtés latéraux, de façon que ladite membrane soit encapsulée et scellée le long des bords latéraux et d'extrémité;

appliquer une source de chaleur à chacun desdits capuchons d'extrémité pendant une durée et à une température suffisante pour fondre, de façon préférentielle une surface du capuchon d'extrémité;

enchâsser respectivement chacun des bords d'extrémité de l'élément filtrant dans la matière de fluorocarbone en fusion, respectivement chaque capuchon d'extrémité;

refroidir lesdits capuchons et bords d'extrémité afin de solidifier la matière en fusion et relier ledit élément filtrant aux capuchons d'extrémité.

8. Procédé selon la revendication 7, caractérisé en ce qu'il comprend en outre l'application d'une couche séparée (42) de résine de fluorocarbone contigue auxdits bords latéraux (38, 40) préalablement à l'application de la chaleur et de la pression.

FIG. 1

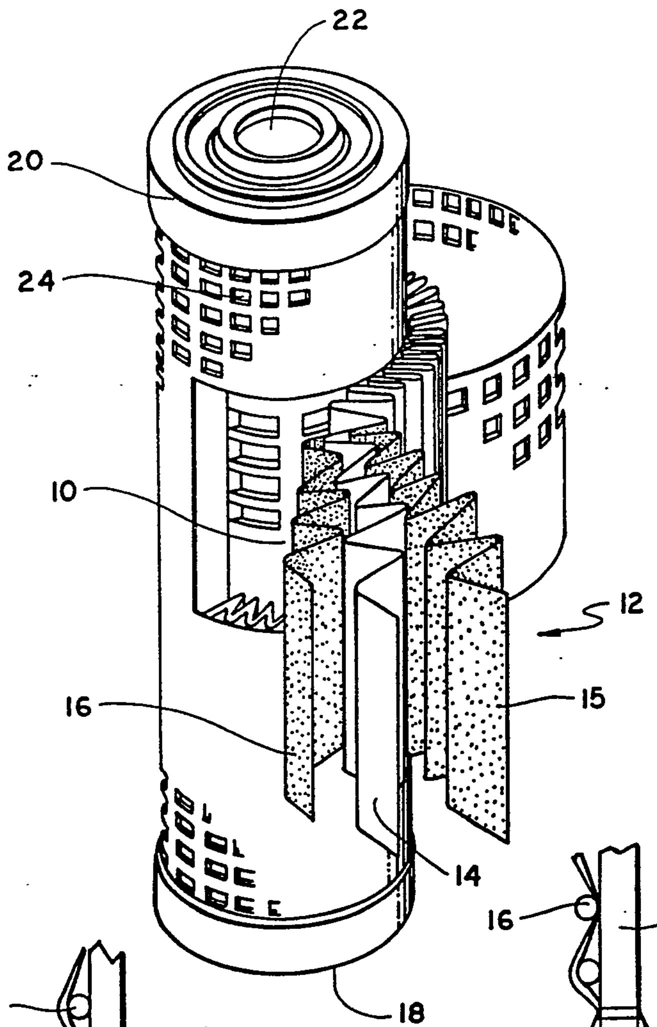


FIG. 2

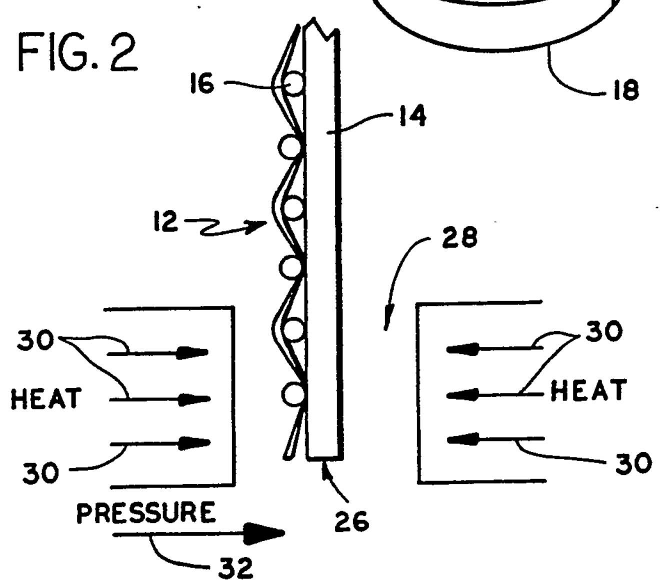


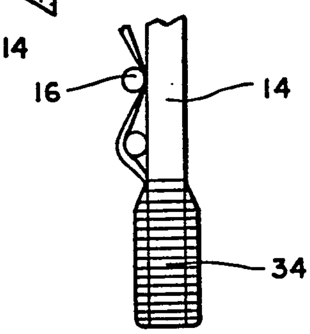


FIG. 3

FIG.4

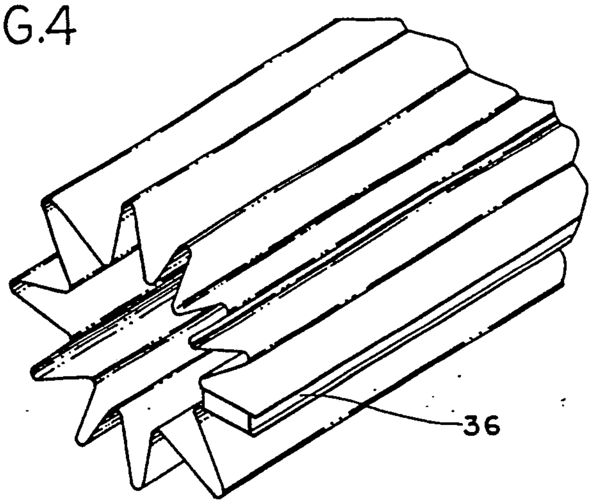


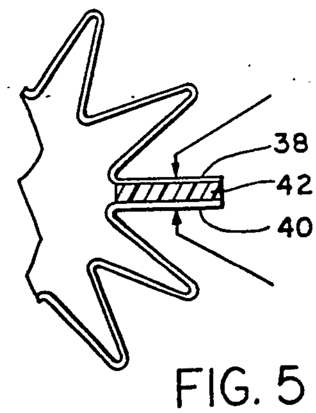


FIG. 5

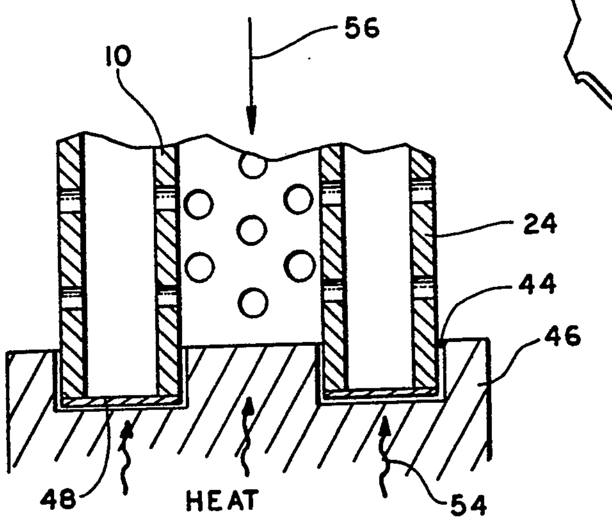


FIG.6

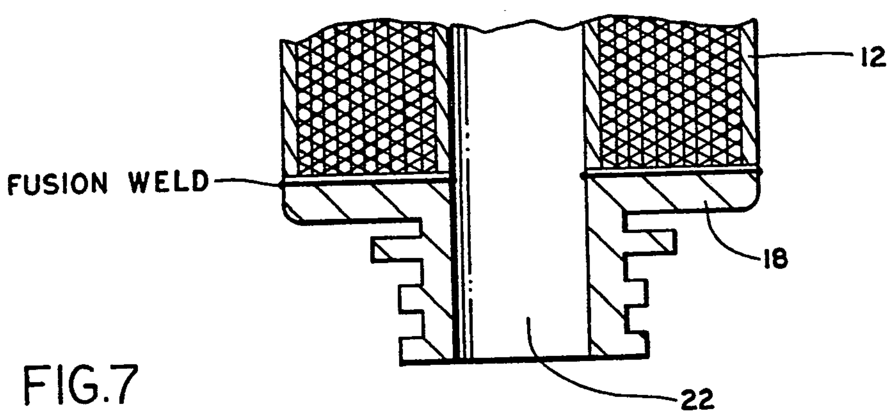


FIG.7